# EUROPÄISCHE PATENTSCHRIFT

(11) **EP 3 684 696 B1**
(45) Veröffentlichungstag und Bekanntmachung des Hinweises auf die Patenterteilung: **23.03.2022**
(21) Anmeldenummer: 18768830.4
(22) Anmeldetag: 06.09.2018
(51) Int. Cl.: B65B 3/02, B29C 49/42, B65B 9/24

(54) **VORRICHTUNG ZUM HERSTELLEN UND BEFÜLLEN VON BEHÄLTERERZEUGNISSEN**
DEVICE FOR MANUFACTURING AND FILLING CONTAINERS
DISPOSITIF DE FABRICATION ET DE REMPLISSAGE DE RECIPIENTS

(30) Priorität: 20.09.2017 DE 102017008803
(43) Veröffentlichungstag der Anmeldung: 29.07.2020
(73) Patentinhaber: kocher-plastik Maschinenbau GmbH, 74429 Sulzbach-Laufen (DE)
(72) Erfinder: SCHNEIDER, Sven, 73453 Abstgmünd (DE); KIRCHMAIER, Dmitri, 74423 Obersontheim (DE); MAYR, Markus, 74405 Gaildorf (DE)
(74) Vertreter: Bartels und Partner, Patentanwälte
(86) Internationale Anmeldenummer: PCT/EP2018/073958
(87) Internationale Veröffentlichungsnummer: WO 2019/057502

(56) Entgegenhaltungen:
- EP-A2- 0 361 123
- DE-A1- 1 479 698
- DE-A1- 2 134 166
- DE-A1-102013 101 775
- DE-B- 1 180 301
- JP-A- 2013 132 861
- US-A- 3 251 915

## Beschreibung

Die Erfindung betrifft eine Vorrichtung zum Herstellen und Befüllen von Behältererzeugnissen mit den Merkmalen im Oberbegriff von Anspruch 1.

Vorrichtungen dieser Art sind Stand der Technik. Das Dokument WO 2009/ 152979 zeigt eine nach dem bekannten bottelpack^{®}-System arbeitende Vorrichtung, die ein automatisiertes Formen (Blasen oder Vakuumformen), Füllen und Verschließen von Behältnissen auf wirtschaftliche Art und Weise ermöglicht. Wenn sensible Erzeugnisse in die genannten Behältnisse eingefüllt werden sollen, beispielsweise Pharmazeutika, sind die internationalen Standards für die aseptische Verpackung zu erfüllen. Um dem Genüge zu leisten, wird Prozessgas als Stützluft, die zur Stabilisierung der Führung des freien Schlauchabschnitts zwischen Extrusionskopf und Form ins Schlauchinnere eingebracht wird, sterile Luft verwendet, so dass ein sog. Abfüll-Sterilraum (ASR) gebildet ist, in welchem die sterile Luft einen wirksamen Schutz gegen das Eindringen von Keimen bildet, bis nach Beendigen des Füllvorgangs bewegliche Formteile der Form geschlossen werden, um durch einen kombinierten Vakuum-Schweißvorgang den gewünschten Kopfverschluss des Behälters auszubilden.

Die DE 1 479 698 beschreibt eine Vorrichtung zum Herstellen und Befüllen von Behältererzeugnissen mit den Merkmalen im Oberbegriff von Anspruch 1, bei der zumindest ein Schlauch plastifizierten Kunststoffmaterials in eine geöffnete Form ausgehend von einem Extrusionskopf entlang einer Schlauchführung hinein extrudierbar ist, wobei mittels mindestens eines Fülldornes, der sich zumindest in einer Funktionsstellung durch den Extrusionskopf erstreckt, ein Füllgut in den jeweiligen Behälter einbringbar ist und wobei mittels mindestens einer Prozessgaszuführungseinrichtung Prozessgas ins Innere des Schlauches bringbar ist, wobei die Prozessgaszuführungseinrichtung innerhalb des Extrusionskopfes einen entlang der Außenseite des Fülldorns verlaufenden Führungskanal aufweist.

Weitere Vorrichtungen dieser Art gehen aus der DE 2 134 166, der EP 0 361 123 A2, der DE 10 2013 101 775 A1, der JP 2013-132861, der US 3 251 915 und der DE 1 180 301 hervor.

Ausgehend von diesem Stand der Technik stellt sich die Erfindung die Aufgabe, eine vorteilhafte Vorrichtung der eingangs genannten Gattung zur Verfügung zu stellen, die auf besonders sichere und wirtschaftliche Weise für das Herstellen von Behältnissen für pharmazeutische oder diagnostische Zwecke einsetzbar ist und die, den behördlichen Vorschriften entsprechend, eine zumindest teilkontinuierliche und repräsentative Messung der geforderten Reinraumklasse des Schlauchinneren nahe einer Abfüllposition ermöglicht.

Erfindungsgemäß ist diese Aufgabe durch eine Vorrichtung gelöst, die die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass mindestens eine weitere Prozessgaszuführungseinrichtung vorhanden ist, mittels deren zusätzliches Prozessgas über mindestens eine weitere Prozessgaszuführung ins Innere des Schlauches nahe dessen Innenseite an der Stelle des Austritts aus dem Extrusionskopf bringbar ist.

Dadurch ist eine - gegenüber der reinen Stützluft gemäß dem Stand der Technik - wesentlich erhöhte Gasmenge in den Schlauch einbringbar und somit eine besonders effektive Regelung zur Stabilisierung der Schlauchausformung und -führung möglich. Ferner ist damit durch gezielte Temperierung des Prozessgases auch eine direkte Einflussnahme auf die Temperatur der Schlauchinnenseite realisierbar. Überdies lässt sich durch Wahl von Durchsatz und Strömungsgeschwindigkeit des Prozessgases das Strömungsprofil im Inneren des Schlauches einstellen. Bei Einbringen von zusätzlichem Prozessgas kann mit Vorteil mindestens eine weitere Abgasführung vorhanden sein, mittels deren Prozessgas zusätzlich zu der Analysemenge abführbar ist.

Es ist ferner vorgesehen, dass zumindest ein Teil des zusätzlich eingebrachten Prozessgases ausgehend vom Inneren des Schlauchs entlang mindestens einer vorgebbaren Abgasführung, die von der jeweiligen Prozessgaszuführung separiert ist, durch den Extrusionskopf hindurch abgeführt ist. Dadurch steht, ohne den Herstellvorgang der Vorrichtung unterbrechen zu müssen, über die Abgasführung eine aus dem Raum innerhalb des Schlauches stammende Prüfgasmenge zur Verfügung, die beispielsweise für den Nachweis der Einhaltung der Vorgaben betreffend Reinraumklasse, den Restsauerstoffgehalt oder Ähnlichem analysierbar ist. Als Prozessgas kann sterile Luft oder - beispielsweise bei sauerstoffempfindlichen Füllgütern - ein Inertgas, wie Stickstoff oder Argon, verwendet werden.

Dabei kann die Anordnung mit Vorteil so getroffen sein, dass zumindest teilweise die Anzahl der eingesetzten Abgasführungen um mindestens eins größer ist als die Anzahl der Prozessgaszuführungen.

Mit Vorteil kann an mindestens eine der Abgasführungen eine Unterdruck erzeugende Einrichtung angeschlossen sein, die eine geregelte Absaugung von Prozessgas in einem für die Stabilisierung der Schlauchformung und -führung optimalen Ausmaß ermöglicht, sowie den Gasanalysegeräten, Partikelzählern etc. konstante, geregelte Gasmengen liefert.

Bei besonders vorteilhaften Ausführungsbeispielen verläuft die jeweils eine Prozessgaszuführung zumindest teilweise zwischen dem jeweiligen Fülldorn und einem Trägergehäuse, in dem der Fülldorn längsverfahrbar geführt ist, wobei Teile dieser einen Prozessgasführung in sich abzweigende Funktionskanäle, im Trägergehäuse verlaufend, übergehen, die sperrend den Eintritt von potentiell unreiner Umgebungsluft in die Prozessgasführung und damit ins Schlauchinnere vermeiden.

Mit Vorteil kann die Anordnung so getroffen sein, dass mindestens eine Abgasführung, die für physikalische und/ oder chemische Analysezwecke vorgesehen ist, mit ihrem einen freien Ende in eine Abzweigkammer im Extrusionskopf ausmündet, die von dem Fülldorn durchgriffen ist, und in die zumindest das Prozessgas aus der Innenseite des Schlauchs eindringt.

Vorzugsweise mündet das eine freie Ende der weiteren Prozessgaszuführung in die Abzweigkammer auf der Seite ein, die der Seite gegenüberliegt, auf der die eine Abgasführung in die Abzweigkammer einmündet. In die Abzweigkammer kann mindestens eine weitere Prozessgaszuführung seitlich einmünden.

Ferner kann hierbei mindestens eine der Abgasführungen vorzugsweise an die Unterdruck erzeugende, regelbare Einrichtung angeschlossen sein und seitlich wie parallel zu der einen weiteren Prozessgaszuführung in die Abzweigkammer einmünden.

Mit Vorteil kann auch zumindest eine Abgasführung auf die Innenseite des Schlauchs ausmünden und kann kanalartig den Extrusionskopf durchgreifen sowie parallel zu dem Fülldorn verlaufend angeordnet sein.

Nachstehend ist die Erfindung anhand von in der Zeichnung dargestellten Ausführungsbeispielen im Einzelnen erläutert. Es zeigen:
- Fig. 1: einen Vertikalschnitt eines Teils einer nach dem bottelpack^{®}-System arbeitenden Vorrichtung gemäß dem Stand der Technik, wobei lediglich der Bereich der Fülldorne dargestellt ist, deren einziger Sichtbarer sich mit seinem füllnadelartigen Ende in eine Form mit beweglichen Formteilen hinein erstreckt;
- Fig. 2: eine der Fig. 1 entsprechende Darstellung, wobei ein erstes Ausführungsbeispiel der erfindungsgemäßen Vorrichtung dargestellt ist; und
- Fig. 3 und 4: entsprechende Darstellungen eines zweiten bzw. dritten Ausführungsbeispiels der erfindungsgemäßen Vorrichtung.

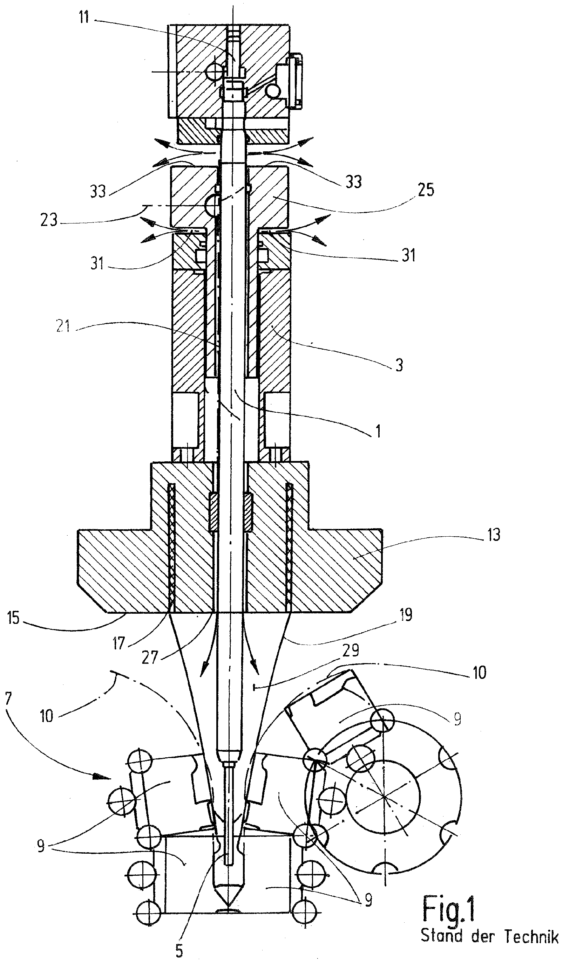

Die Fig. 1 zeigt von einer bekannten Vorrichtung zum Herstellen und Befüllen von Behältererzeugnissen durch Blas- oder Vakuumformen ein Vorrichtungsteil, das im Wesentlichen dem Vorrichtungsteil entspricht, wie es in Fig. 5 der zum Stand der Technik erwähnten WO 2009/152 979 A1 gezeigt ist. Wie in dieser Figur ist von einer Mehrzahl von Fülleinrichtungen, die in einer zur Zeichnungsebene senkrechten Reihe angeordnet sind, lediglich ein einziger Fülldorn 1 sichtbar, der in der bei derartigen Vorrichtungen üblichen Weise in einem Trägergehäuse 3 in unterschiedliche, gewählte Betriebsstellungen gesteuert verfahrbar gelagert ist. Die Fig. 1 zeigt den sichtbaren Fülldorn 1 in einer vorgeschobenen Betriebsstellung für einen Füllvorgang, wobei der füllnadelartig verjüngte Endabschnitt 5 in eine kopfseitig noch nicht geschlossene Form 7 vorgeschoben ist. In einer Art Karussell-Anordnung werden hierbei Einzel-Formteile 9 auf einer fiktiven Kreisbogenbahn 10 paarweise aufeinander zu bewegt, um eine geschlossene Herstellform zu bilden, und zum Öffnen der Form wieder auseinanderbewegt. Für eine dosierte Abgabe von Füllgut aus dem Endabschnitt 5 weist jeder Fülldorn 1 einen zentral gelegenen Füllkanal 11 auf. In der bei derartigen Vorrichtungen üblichen Weise sind die Füllkanäle 11 von einer (nicht gezeigten) zentralen Füllgutleitung her mit steuerbaren Dosiseinheiten des jeweils einzufüllenden Erzeugnisses belieferbar.

An dem Trägergehäuse 3 ist ein Extrusionskopf 13 - oft auch als Schlauchkopf bezeichnet - gelagert, der an seiner Stirnfläche 15 in an sich bekannter Weise eine ringförmige Extrusionsdüse 17 aufweist, aus der im Betrieb ein Schlauch 19 austritt, der aus plastifiziertem Kunststoffmaterial gebildet ist, das dem Extrusionskopf 13 von einer (nicht gezeigten) Extrudereinrichtung her zugeführt wird. Da derartige Extrudereinrichtungen, ebenso wie die Bauweise des Extrusionskopfes 13, an sich bekannt sind, beispielsweise in Form von nach dem bottelpack^{®}-Verfahren arbeitenden Einrichtungen, erübrigt sich eine nähere Erläuterung der diesbezüglichen Einzelheiten.

Zur Stabilisierung der freien Schlauchformung und -führung im Verlauf des Schlauchs 19 von der Extrusionsdüse 17 in die Form 7 ist in bekannter Weise eine sogenannte Prozessgaszuführungseinrichtung respektive Stützlufteinrichtung vorgesehen. Diese weist einen innerhalb des Trägergehäuses 3 und des Extrusionskopfes 13 entlang der Außenseite des Fülldorns 1 verlaufenden Führungskanal 21 auf, der sich, von einem Eingang 23 ausgehend, der sich an einem hülsenartigen Endteil 25 des Trägergehäuses 3 befindet, entlang der Außenseite des jeweiligen Fülldorns 1 bis zu einer Austrittsmündung 27 an der Stirnfläche 15 des Extrusionskopfes 13 erstreckt. Durch Einströmen sterilen Prozessgases oder steriler Stützluft über die Austrittsmündung 27 ins Innere des Schlauchs 19, der in seinem Verlauf vom Extrusionskopf 13 in die Form 7 hinein einen abgeschlossenen Raum 29 bildet, bildet das Schlauchinnere den Abfüll-Sterilraum, innerhalb dessen der gesamte Produktionsvorgang durchgeführt wird, d.h. bis zur Bildung des Kopfverschlusses am befüllten Behälter, was durch Schließen der betreffenden Kopfbacken der Form 7 durchgeführt wird. Da entsprechende Mechanismen der Form 7 an sich bekannt sind, ist in der Zeichnung die als Ganzes mit 7 bezeichnete Form lediglich schematisch vereinfacht, also ohne gesonderte Darstellung von Hauptformteilen und Kopfformteilen, wiedergegeben. Um den Führungskanal 21 gegen den Eintritt von Umgebungsluft abzuschirmen, sind im Endteil 25 des Trägergehäuses 3 quer verlaufende Funktionskanäle 31 vorgesehen, die mit dem Führungskanal 21 in Verbindung sind und über die Stützluft oder Prozessgas frei abströmen kann. Zusätzliche freie Abströmkanäle 33 für Prozessgas sind am äußeren Ende des Endteils 25 des Trägergehäuses 3 vorgesehen.

Der Gasraum 29 innerhalb des Schlauches 19 ist für analytische Zwecke nicht zugänglich, auch erschweren die große Länge des prozessgaszuführenden Kanals 21 und die geringen Prozessgas- oder Stützluftvolumenflüsse eine produktionssichere und präzise Steuerung der Schlauchausbildung.

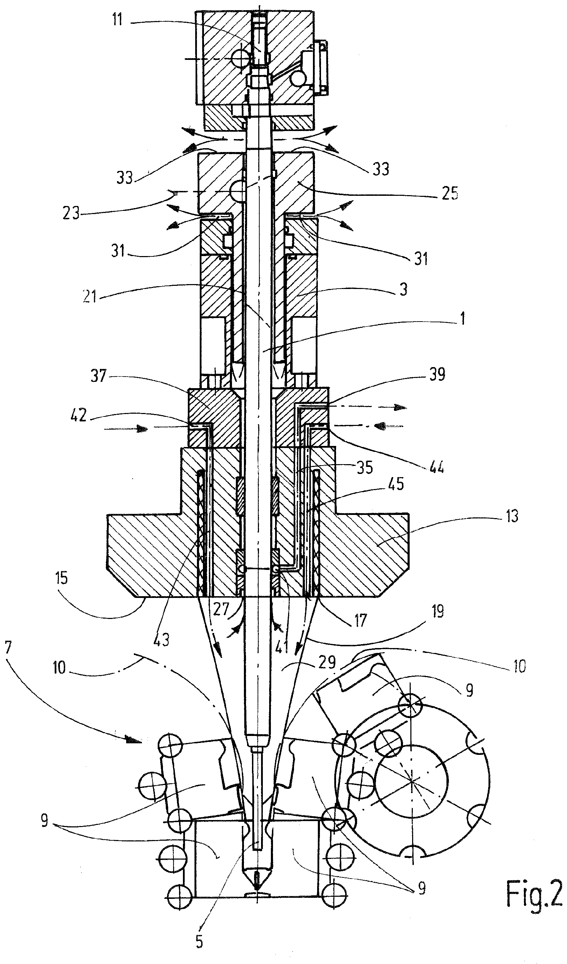

Die Fig. 2 bis 4 zeigen Ausführungsbeispiele der erfindungsgemäßen Vorrichtung. Diese weisen im Extrusionskopf - und damit in unmittelbarer Nähe zur Innenwand des Schlauches - zusätzliche kurze Zu- und/oder Abführungen für reines, steriles Prozessgas sowie Abzweigkammern auf. Das erste Ausführungsbeispiel von Fig. 2 unterscheidet sich von dem in Fig. 1 gezeigten Stand der Technik zum einen dadurch, dass zusätzlich eine Abgasführung 35 vorgesehen ist, die auf einem Großteil ihrer Länge parallel zum Fülldorn 1 innerhalb des Extrusionskopfes 13 und des anschließenden Abschnitts 37 des Trägergehäuses 3 verläuft, mit einem Abgasausgang 39 aus dem Abschnitt 37 austritt und eingangsseitig in eine Abzweigkammer 41 im Extrusionskopf 13 mündet. Zum anderen unterscheidet sich das Beispiel von Fig. 2 vom Stand der Technik durch das Vorhandensein zweier weiterer Prozessgaszuführungen 43 und 45, die von Prozessgaseingängen 42 bzw. 44 her und zum Fülldorn 1 parallel, durch den Extrusionskopf 13 verlaufen und in den inneren Raum 29 des Schlauches 19, zur Extrusionsdüse 17 eng benachbart, einmünden. Durch geregeltes Einbringen der zusätzlichen Prozessgasströme dringt eine repräsentative Gasmenge aus dem Raum 29 in die Abzweigkammer 41 und über diese in die Abgasführung 35 ein und ist dadurch an deren Abgasausgang 39 abnehmbar. Somit steht während des Betriebs der Vorrichtung kontinuierlich eine Gasmenge (Probegas) mit repräsentativer Zusammensetzung zur Verfügung, die für Analysezwecke absaugbar ist, beispielsweise um nachzuweisen, dass die Vorrichtung die geforderte Reinheitsklasse erfüllt, oder - beispielsweise bei sauerstoffempfindlichen Füllgütern - die Restsauerstoffkonzentration im Schlauch ausreichend niedrig ist. An den Abgasausgang 39 kann hierfür ein entsprechendes Messgerät (nicht abgebildet), für physikalische und/oder chemische Analysezwecke, beispielsweise ein Partikelzähler, angeschlossen werden.

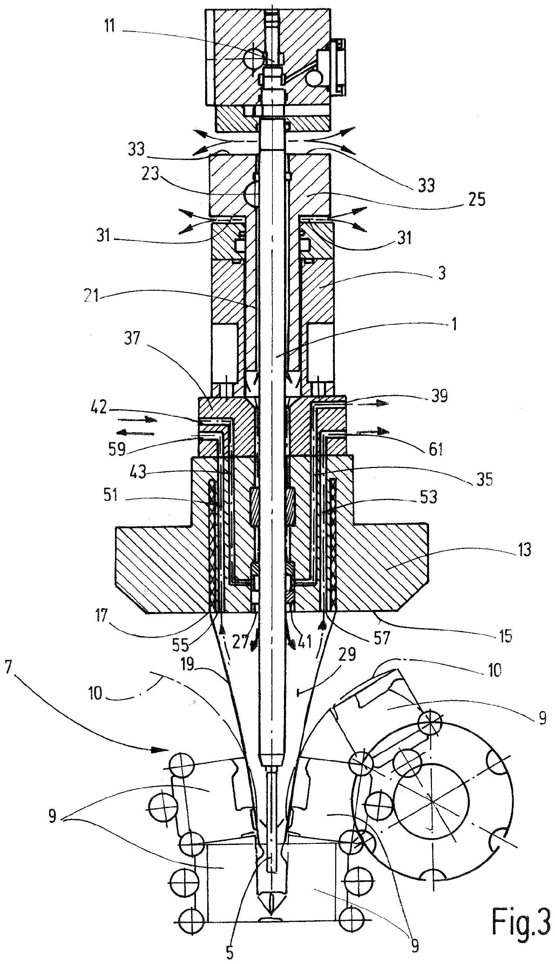

Die Fig. 3 zeigt ein zweites Ausführungsbeispiel der erfindungsgemäßen Vorrichtung. Dieses unterscheidet sich vom Beispiel von Fig. 2 dadurch, dass zwei zusätzliche Abgasführungen 51 und 53 vorgesehen sind, die jeweils von einer Mündung 55 bzw. 57 ausgehend, die an der Stirnfläche 15 des Extrusionskopfes 13 eng benachbart zur Extrusionsdüse 17 gelegen sind, sich parallel zum Fülldorn 1 verlaufend zu Abgasausgängen 59 bzw. 61 am Gehäuseabschnitt 37 erstrecken. Wie beim Beispiel von Fig. 2 ist eine zusätzliche Prozessgaszuführung 43 vorgesehen, die vom Prozessgaseingang 42 ausgeht und sich mit ihrem Hauptteil im Extrusionskopf 13 parallel zum Fülldorn 1 erstreckt. Ein weiterer Unterschied zum Beispiel von Fig. 2 besteht darin, dass die zusätzliche Prozessgasführung 43 nicht direkt zum Innenraum 29 im Schlauch 19 führt, sondern in die Abzweigkammer 41 auf der Seite einmündet, die der Seite der Einmündung der Abgasführungen 35 gegenüberliegend ist. Von der Abzweigkammer 41 tritt ein Teil des sterilen Prozessgases in den Innenraum 29 des Schlauches 19 über, während ein anderer Teil in den Führungskanal 21 überströmt und somit als Barriere gegen potentielle Verunreinigungen aus den oberhalb der Abzweigkammer 41 befindlichen Teilen der Vorrichtung wirkt.

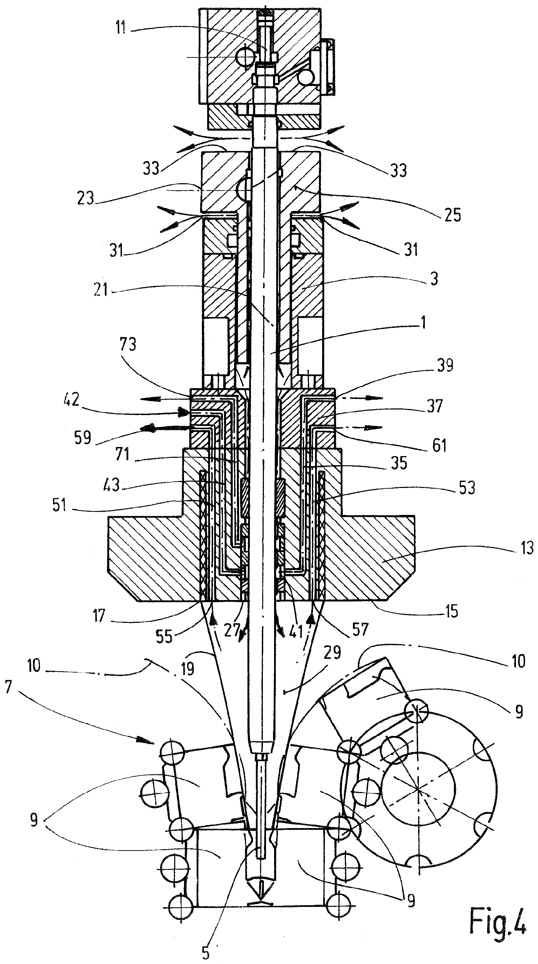

Die Fig. 4 zeigt ein drittes Ausführungsbeispiel der erfindungsgemäßen Vorrichtung. Dieses unterscheidet sich vom Beispiel von Fig. 3 dadurch, dass in die Abzweigkammer 41 nicht nur die eine Abgasführung 35 und die zusätzliche Prozessgaszuführung 43 einmünden, sondern dass eine weitere Abgasführung 71 in die Abzweigkammer 41 einmündet. Wie die Prozessgasführung 43 verläuft die zusätzliche Abgasführung 71 mit ihrem Hauptteil innerhalb des Extrusionskopfes 13 parallel zum Fülldorn 1 und tritt an einem Abgasausgang 73 im Gehäuseabschnitt 37 aus. Am Abgasausgang 73 ist eine nicht gezeigte Unterdruck erzeugende Einrichtung angeschlossen, die eine gesteuerte Absaugung und damit die Einstellung eines gewünschten Druckniveaus ermöglicht, bei dem im Betrieb am Abgasausgang 39 eine Probegasmenge für Analysezwecke zur Verfügung steht, bei gleichzeitig durch das eingebrachte zusätzliche Prozessgas erhaltener stabiler Führung des den Raum 29 einschließenden Schlauches 19.

Die erfindungsgemäßen Ausführungen ermöglichen ferner - gegenüber der im Stand der Technik ausschließlichen verwendeten Stützluft - deutlich erhöhte Gasflussraten. Somit kann das Strömungsprofil im Schlauchinneren 29 gezielt eingestellt werden. Dies ist vorteilhaft verwendbar für die beschriebenen analytischen Zwecke, zur effizienten Spülung des Schlauchinneren 29 oder auch zur Feineinstellung der Temperatur der Schlauchinnenoberfläche. Dies gelingt durch die Vortemperierung des zugeführten sterilen Prozessgases und der Einstellung von dessen Durchsatz und Strömungsgeschwindigkeit und ist für das sichere Verschließen der befüllten Behälter durch Verschweißen von Bedeutung.

Durch die erfindungsgemäß erhöhten Gasdurchsätze lassen sich beispielsweise Aerosole oder explosive Dämpfe des Füllgutes, die beim Füllvorgang auftreten können, sicher und direkt abführen und können optional durch ein Messgerät am Abgasausgang 39 erfasst und analysiert werden.

Überdies ermöglichen es die erfindungsgemäßen Ausführungen vorteilhaft verschiedene und/oder verschiedenartig konditionierte Prozessgase gleichzeitig und selektiv zu verwenden. So kann - beispielsweise für Füllgüter, die explosive Gemische bilden können - über die Zuführung 21 lediglich Luft und gleichzeitig über die Zuführungen 43 ein - optional vortemperiertes - Inertgas wie Stickstoff, Kohlendioxid oder Argon zugeführt werden. Dies sichert zum einen den Explosionsschutz und reduziert zum andern den Bedarf an Inertgas, was zu geringeren Produktionskosten führt.

## Patentansprüche

1. Vorrichtung zum Herstellen und Befüllen von Behältererzeugnissen, bei der zumindest ein Schlauch (19) plastifizierten Kunststoffmaterials in eine geöffnete Form (7) ausgehend von einem Extrusionskopf (13) entlang einer Schlauchführung hinein extrudierbar ist, wobei mittels mindestens eines Fülldornes (1), der sich zumindest in einer Funktionsstellung durch den Extrusionskopf (13) erstreckt, ein Füllgut in den jeweiligen Behälter einbringbar ist und wobei mittels mindestens einer Prozessgaszuführungseinrichtung (21, 23) Prozessgas ins Innere des Schlauches (19) bringbar ist, wobei die Prozessgaszuführungseinrichtung (21, 23) einen innerhalb des Extrusionskopfes (13) entlang der Außenseite des Fülldorns (1) verlaufenden Führungskanal (21) aufweist, wobei zumindest ein Teil des eingebrachten Prozessgases entlang mindestens einer vorgebbaren Abgasführung (35), die von dem jeweiligen Führungskanal (21) separiert ist, durch den Extrusionskopf (13) hindurch abgeführt ist, **dadurch gekennzeichnet, dass** mindestens eine weitere Prozessgaszuführungseinrichtung vorhanden ist, mittels deren zusätzliches Prozessgas über mindestens eine weitere Prozessgaszuführung (43) ins Innere des Schlauches (19) nahe dessen Innenseite (29) an der Stelle des Austritts aus dem Extrusionskopf (13) bringbar ist.

2. Vorrichtung nach Anspruch 1, **dadurch gekennzeichnet, dass** das Prozessgas vortemperierbar zugeführt werden kann.

3. Vorrichtung nach Anspruch 1 oder 2, **dadurch gekennzeichnet, dass** über den Führungskanal (21) und die Prozessgaszuführung (43) zumindest teilweise gleichzeitig verschiedenartige und/oder verschieden konditionierte Prozessgase, bevorzugt Luft und ein Inertgas, einbringbar sind.

4. Vorrichtung nach einem der vorstehenden Ansprüche, **dadurch gekennzeichnet, dass** mindestens eine weitere Abgasführung (51, 53) vorhanden ist, mittels deren das Prozessgas zumindest teilweise aus dem Inneren des Schlauches (19) bevorzugt von dessen Innenseite (29) abführbar ist.

5. Vorrichtung nach Anspruch 4, **dadurch gekennzeichnet, dass** zumindest teilweise die Anzahl der eingesetzten Abgasführungen (21, 35, 51, 53, 71) um mindestens eins größer ist als die Anzahl der Prozessgaszuführungen (43, 45).

6. Vorrichtung nach einem der vorstehenden Ansprüche, **dadurch gekennzeichnet, dass** an mindestens eine (35, 71) der Abgasführungen (35, 51, 53, 71) eine bevorzugt regelbare Unterdruck erzeugende Einrichtung angeschlossen ist.

7. Vorrichtung nach einem der vorstehenden Ansprüche, **dadurch gekennzeichnet, dass** an mindestens eine (35) der Abgasführungen (35, 51, 53, 71) ein Messgerät, insbesondere zur physikalischen und/ oder chemischen Analyse, anschließbar ist.

8. Vorrichtung nach Anspruch 7, **dadurch gekennzeichnet, dass** es sich bei dem Messgerät um ein Partikelzählgerät handelt.

9. Vorrichtung nach einem der vorstehenden Ansprüche, **dadurch gekennzeichnet, dass** zumindest ein Teilstrom des Prozessgases aus einer Abzweigkammer (41) in den jeweiligen Führungskanal (21) eintritt, der zumindest teilweise zwischen dem jeweiligen Fülldorn (1) und einem Trägergehäuse (3) verläuft, in dem der Fülldorn (1) längsverfahrbar geführt ist, und über Funktionskanäle (31), im Trägergehäuse (3) verlaufend, austritt und sperrend den Eintritt von Umgebungsluft verhindert.

10. Vorrichtung nach Anspruch 9, **dadurch gekennzeichnet, dass** mindestens eine Abgasführung (35) mit ihrem einen Ende in die Abzweigkammer (41) im Extrusionskopf (13) ausmündet, die von dem Fülldorn (1) durchgriffen ist und in die zumindest das Prozessgas aus dem Inneren des Schlauches (19) eindringt.

11. Vorrichtung nach Anspruch 9 oder 10, **dadurch gekennzeichnet, dass** das eine Ende der weiteren Prozessgasführung (43) in die Abzweigkammer (41) auf der Seite einmündet, die der Seite gegenüberliegt, auf der die eine Abgasführung (35) in die Abzweigkammer (41) einmündet.

12. Vorrichtung nach einem der Ansprüche 9 bis 11, **dadurch gekennzeichnet, dass** die mindestens eine weitere Abgasführung (71) seitlich in die Abzweigkammer (41) einmündet.

13. Vorrichtung nach einem der Ansprüche 9 bis 12, **dadurch gekennzeichnet, dass** mindestens eine (35, 71) der Abgasführungen (35, 51, 53, 71) vorzugsweise an die Unterdruck erzeugende Einrichtung angeschlossen ist und seitlich wie parallel zu der einen weiteren Prozessgasführung (43) in die Abzweigkammer (41) einmündet.

14. Vorrichtung nach einem der vorstehenden Ansprüche, **dadurch gekennzeichnet, dass** zumindest eine Abgasführung (51, 53) auf die Innenseite (29) des Schlauches (19) ausmündet und kanalartig den Extrusionskopf (13) durchgreift sowie parallel zu den Fülldornen (1) verlaufend angeordnet ist.

## Claims

1. Device for producing and filling container products, in which at least one tube (19) of plasticised plastic material can be extruded into an open mould (7), starting from an extrusion head (13) along a tube guide, wherein a filling material can be introduced into the respective container by means of at least one filling mandrel (1), which extends through the extrusion head (13) at least in one functional position and wherein process gas can be introduced into the interior of the tube (19) by means of at least one process gas feed device (21, 23), wherein the process gas feed device (21, 23) comprises a guide duct (21) extending inside the extrusion head (13) along the outside of the filling mandrel (1), wherein at least a part of the process gas introduced is discharged through the extrusion head (13) along at least one predefinable exhaust gas duct (35) which is separated from the respective guide duct (21), **characterised in that** at least one further process gas feed device is provided, by means of which additional process gas can be introduced via at least one further process gas feed (43) into the interior of the tube (19) near its inner side (29) at the point of exit from the extrusion head (13).

2. Device according to claim 1, **characterised in that** the process gas can be supplied in a pre-heatable/coolable manner.

3. Device according to claim 1 or 2, **characterised in that** different and/or differently conditioned process gases, preferably air and an inert gas, can be introduced at least in part simultaneously via the guide duct (21) and the process gas feed (43).

4. Device according to one of the preceding claims, **characterised in that** at least one further exhaust gas duct (51, 53) is provided, by means of which the process gas can be at least partially discharged from the interior of the tube (19), preferably from the inside (29) thereof.

5. Device according to claim 4, **characterised in that** at least in part the number of exhaust gas ducts (21, 35, 51, 53, 71) used is greater than the number of process gas feeds (43, 45) by at least one.

6. Device according to one of the preceding claims, **characterised in that** a preferably controllable vacuum-generating device is connected to at least one (35, 71) of the exhaust gas ducts (35, 51, 53, 71).

7. Device according to one of the preceding claims **characterised in that** a measuring device, in particular for physical and/or chemical analysis, can be connected to at least one (35) of the exhaust gas ducts (35, 51, 53, 71).

8. Device according to claim 7, **characterised in that** the measuring device is a particle counter.

9. Device according to one of the preceding claims, **characterised in that** at least a partial flow of the process gas enters from a branch chamber (41) into the respective guide duct (21), which extends at least in part between the respective filling mandrel (1) and a support housing (3), in which the filling mandrel (1) is guided in a longitudinally displaceable manner, and exits via functional ducts (31), extending in the support housing (3), and prevents the entry of ambient air in a blocking manner.

10. Device according to claim 9, **characterised in that** at least one exhaust gas duct (35) leads with its one end into the branch chamber (41) in the extrusion head (13), said duct being penetrated by the filling mandrel (1) and into which duct at least the process gas from the interior of the tube (19) infiltrates.

11. Device according to claim 9 or 10, **characterised in that** the one end of the further process gas feed (43) discharges into the branch chamber (41) on the side which is opposite the side on which the one exhaust gas duct (35) opens into the branch chamber (41).

12. Device according to one of claims 9 to 11, **characterised in that** the at least one further exhaust gas duct (71) discharges laterally into the branch chamber (41).

13. Device according to one of claims 9 to 12, **characterised in that** the at least one (35, 71) of the exhaust gas ducts (35, 51, 53, 71) is preferably connected to the vacuum-generating device and discharges into the branch chamber (41) laterally and parallel to the one further process gas feed (43).

14. Device according to one of the preceding claims, **characterised in that** at least one exhaust gas duct (51, 53) leads to the inside (29) of the tube (19) and penetrates the extrusion head (13) in the manner of a duct and is arranged extending parallel to the filling mandrels (1).

## Revendications

1. Installation de fabrication et de remplissage de produits formant récipients, dans lequel au moins un tuyau (19) souple en matière plastique plastifiée peut être extrudé dans un moule (7) ouvert à partir d'une tête (13) d'extrusion le long d'un guidage de tuyau, dans lequel, au moyen d'au moins un mandrin (1) de remplissage, qui s'étend au moins dans une position de fonctionnement dans la tête (13) d'extrusion, une charge peut être introduite dans le récipient respectif et dans lequel, au moyen d'au moins un dispositif (21, 23) d'apport de gaz de processus, du gaz de processus peut être apporté à l'intérieur du tuyau (19), dans lequel le dispositif (21, 23) d'apport de gaz de processus a un conduit (21) de guidage s'étendant à l'intérieur de la tête (13) d'extrusion le long du côté extérieur du mandrin (1) de remplissage, dans lequel au moins une partie du gaz de processus introduit est évacué à travers la tête (13) d'extrusion, le long d'au moins une conduite (35) pouvant être donnée à l'avance de gaz d'évacuation, qui est séparée du conduit (21) de guidage respectif, **caractérisée en ce qu'**il y a au moins un autre dispositif d'apport de gaz de processus, au moyen duquel du gaz de processus supplémentaire peut être apporté par au moins un autre apport (43) de gaz de processus à l'intérieur du tuyau (19) à proximité de son côté (29) intérieur à l'endroit de la sortie de la tête (13) d'extrusion.

2. Installation suivant la revendication 1, **caractérisée en ce que** le gaz de processus peut être apporté en pouvant être mis auparavant en température.

3. Installation suivant la revendication 1 ou 2, **caractérisée en ce que**, par le conduit (21) de guidage et l'apport (43) de gaz de processus, des gaz de processus, de préférence de l'air et un gaz inerte, de natures différentes et/ou conditionnés différemment, peuvent être introduits au moins en partie en même temps.

4. Installation suivant l'une des revendications précédentes, **caractérisée en ce qu'**il y a au moins une autre conduite (51, 53) de gaz d'échappement, au moyen de laquelle le gaz de processus peut être évacué au moins en partie de l'intérieur du tuyau (19), de préférence par son côté (29) intérieur.

5. Installation suivant la revendication 4, **caractérisée en ce qu'**au moins en partie le nombre des conduites (21, 35, 51, 53, 71) de gaz d'échappement utilisées est plus grand d'au moins un que le nombre des apports (43, 45) de gaz de processus.

6. Installation suivant l'une des revendications précédentes, **caractérisée** à ce qu'à au moins l'une (35, 71) des conduites (35, 51, 53, 71) de gaz d'échappement est raccordé un dispositif produisant une dépression, de préférence réglable.

7. Installation suivant l'une des revendications précédentes, **caractérisée** à ce qu'à au moins l'une (35) des conduites (35, 51, 53, 71) de gaz d'échappement peut être raccordé un appareil de mesure, notamment d'analyse physique et/ou chimique.

8. Installation suivant la revendication 7, **caractérisée en ce que** l'appareil de mesure est un appareil de comptage de particules.

9. Installation suivant l'une des revendications précédentes, **caractérisée en ce qu'**au moins un courant partiel du gaz de processus entre d'une chambre (41) de dérivation dans le conduit (21) de guidage respectif, qui s'étend au moins en partie entre le mandrin (1) de remplissage respectif et une enveloppe (3) de support, dans laquelle le mandrin (1) de remplissage peut être guidé avec possibilité de se déplacer longitudinalement et sort par des conduits (31) fonctionnels, s'étendant dans l'enveloppe (3) de support, et empêche en y faisant obstacle l'entrée d'air ambiant.

10. Installation suivant la revendication 9, **caractérisée en ce qu'**au moins une conduite (35) de gaz d'échappement débouche par l'une de ses extrémités dans la chambre (41) de dérivation de la tête (13) d'extrusion, qui est traversée par le mandrin (1) de remplissage et dans laquelle pénètre au moins le gaz de processus venant de l'intérieur du tuyau (19).

11. Installation suivant la revendication 9 ou 10, **caractérisée en ce que** la une extrémité de l'autre conduite (43) pour du gaz de processus débouche dans la chambre (41) de dérivation du côté, qui est opposé au côté où la une conduite (35) pour du gaz d'échappement débouche dans la chambre (41) de dérivation.

12. Installation suivant l'une des revendications 9 à 11, **caractérisée en ce que** la au moins une autre conduite (71) pour du gaz d'échappement débouche latéralement dans la chambre (41) de dérivation.

13. Installation suivant l'une des revendications 9 à 12, **caractérisée en ce qu'**au moins l'une (35, 71) des conduites (35, 51, 53, 71) pour du gaz d'échappement est raccordée de préférence au dispositif produisant une dépression et débouche latéralement ainsi que parallèlement à la une autre conduite (43) pour du gaz de processus dans la chambre (41) de dérivation.

14. Installation suivant l'une des revendications précédentes, **caractérisée en ce qu'**au moins une conduite (51, 53) pour du gaz d'échappement débouche du côté (29) intérieur du tuyau (19) et traverse, à la manière d'un conduit, la tête (13) d'extrusion ainsi qu'en s'étendant parallèlement au mandrin (1) de remplissage.
